# EUROPEAN PATENT APPLICATION

(11) **EP 2 853 514 A2**
(43) Date of publication of application: **01.04.2015**
(21) Application number: 14460008.7
(22) Date of filing: 26.02.2014
(51) Int. Cl.: C01G 9/02, C22C 18/00

(54) **New structure of alloys of the Li/ZnO systems and their application**

(30) Priority: 19.09.2013 PL 40539413
(71) Applicant: Akademia im. Jana Dlugosza w Czestochowie, 42-200 Czestochowa (PL)
(72) Inventor: Ciesielski, Wojciech, 42-200 Cz?stochowa (PL); Pavlyuk, Volodymyr, 42-200 Cz?stochowa (PL); Misztal, Renata, 42-218 Cz?stochowa (PL)
(74) Representative: Brodowska, Iwona

(57) **Abstract**

The essence of the invention is to develop alloys and methods of preparing Li₂ZnO₂ and LiZnO alloys as a means of catalytic properties.

In applying according to the invention Li / ZnO is used as the catalyst during thermal decomposition of the grain, particularly rye.

## Description

The invention relates to specified structure of alloys of the catalyst systems Li/ZnO, and the use of these systems Li/ZnO as the catalysts used in thermal degradation of cereal grains, and having so far unexplored catalytic properties.

Previous works showed the catalytic effect of salts of metal ions of the transition groups to thermal decomposition of starch and grains and straw of cereals [1-9].

For the obtained systems DSC spectra and weight loss accompanying the decomposition (TG) were measured. The obtained results were evaluated for their potential uses.

By choosing the metal alloy and the type of cereal, thermal decomposition process can be controlled so as to obtain maximum efficiency of the char, or the volatile products at the lowest input of energy, i.e. when heated to a temperature as low as possible.

It is preferred for the starting temperature of carbonization to be as low as possible, and for the amount of the char to be as large as possible. On the other hand, when it comes to gaseous products, as in the case of the char, starting temperature of degradation was adequate to obtain the required fractions of gas and loss in mass, and thus the quantity of volatile products, was the greatest. On the other hand, it is preferred, to be observed in the case of obtaining the char one clear loss of mass and in the case of preparation of volatile products - two or three clear mass losses - responsible for the secretion of the specific gas fraction from the system.

Research indicates the possibility of implementation of appropriate metal ions in the initial phase of production of the char or gasification of biomass. The char may then be hydrogenated to give the appropriate fuel fractions. Controlling the biomass gasification process with metal ions (alloys), can cause the formation of appropriate composition of the synthesis gas, which facilitates the preparation of specific fractions of fuel, using the appropriately selected for them: temperature and pressure.

Surprisingly, it turned out that unique properties of the systems Li/ZnO, according to the invention, can lead to a wide range of applications of these systems in all fields chemicals industry and engineering environment, including catalysis, and the preparation of biofuels.

So far, in the prior art structure of the systems ZnO with lithium ions has not been described in the literature, especially their catalytic properties during thermal decomposition of cereal grains, characteristics of these systems have not yet been investigated. Unexpectedly, it turned out that the systems Li/ZnO exhibit catalytic properties during decomposition of rye grains.

Systems of metal oxides and salts of metals of transition groups with polysaccharides of the botanical origin were known and were so far used as soil stabilizers [10], the components of drilling muds [11] and as collectors of metal ions [11].

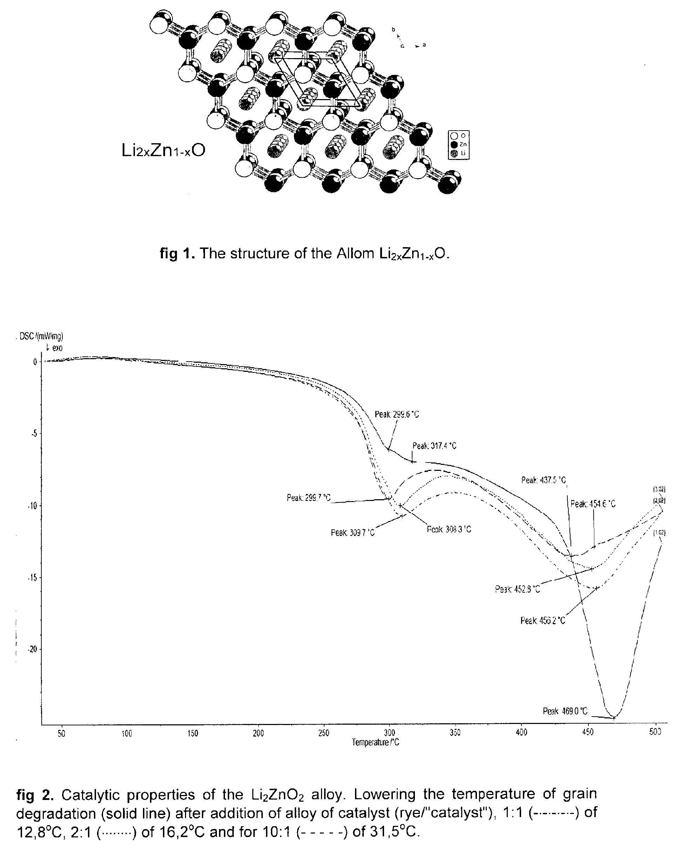

Alloys of the systems Li/ZnO with a new structure, according to the invention, characterized in that it is represented by the general formula Li₂ₓZn₁₋ₓO, and has a characteristic structure as shown in fig. 1.

The alloy according to the invention, with specified structure shown in fig. 1 is obtained in the synthesis of ZnO - zinc oxide and lithium hydroxide monohydrate (LiOH x H₂O), ZnO and LiOH x H₂O were mixed together in a relative to the stoichiometric proportion corresponding to LiZnO and Li₂ZnO₂ and the mixture was homogenized by mechanical agitation, and then compressed into tablets at 20 MPa. Thereafter, the resulting tablet is placed in a porcelain crucible, placed in an oven, and applying the following thermal cycle: 1) heating (10°C/min) up to T = 400°C, 2) isotherm plateau (24 hours) 3) heating (10°C/min) up to T = 600°C, 4) isotherm plateau (24 hours), 5) heating (10°C/min) up to T = 700°C, 6) isotherm plateau (1 hour), 7) cooling (about 5°C/min) at room temperature. The result of the process is alloys with structures strictly described by the authors of the invention (fig. 1).

This invention relates to the use of the manufactured systems of zinc oxides with lithium systems (Li/ZnO) according to the invention, as a means of catalytic properties.

In the use according to the invention, as catalysts are used systems Li/ZnO, wherein the stoichiometric ratio of the elements can be described by formulas Li₂ZnO₂ and LiZnO.

Said salts were used in comparison to the cereal grain - rye - which is popular in Poland. By using the solution according to the invention, technology effects were obtained and the methodology for the preparation of alloy of catalyst, and the methodology for the preparation of rye systems with the addition of alloy catalyst, allowing for efficiency control of the resulting pyrolysate, char and volatile products, what causes economic effects associated with the relatively low production cost of biofuels.

The following is a methodology for obtaining, according to the invention, alloys systems. The following example show also a method of preparation of the alloy systems (as catalyst) with grain cereals (rye) and illustrates the operation of an alloy as a catalyst.

### Example I

### Preparation of alloys Li/ZnO.

For the synthesis, zinc oxide ZnO (high quality) and lithium hydroxide monohydrate (LiOH x H₂O) was used. ZnO and LiOH x H₂O were mixed together in a relative to the stoichiometric proportion corresponding to LiZnO and Li₂ZnO₂ and the mixture was homogenized by mechanical agitation, and then compressed into tablets at 20 MPa. Thereafter, the resulting tablet is placed in a porcelain crucible, inserted into the oven, and applying the following thermal cycle: 1) heating (10°C/min) up to T = 400°C, 2) isotherm plateau (24 hours) 3) heating (10°C/min) up to T = 600°C, 4) isotherm plateau (24 hours), 5) heating (10°C/min) up to T = 700°C, 6) isotherm plateau (1 hour), 7) cooling (about 5°C/min) at room temperature. The result of the process are alloys with structures strictly described by the authors of the invention (fig. 1).

### Example II.

### Alloys Li/ZnO as a catalyst during the decomposition of rye grain.

In order to investigate the catalytic properties of systems Li/ZnO, the systems with the minced rye grain in a relative (rye/"catalyst") of 1:1, 2:1 and 10:1 were obtained.

1 g of grain minced in a ball mill was weighed out and corresponding to discuss weight ratios amount of LiZnO or Li₂ZnO₂ was added. The samples were homogenized by mechanical stirring. Samples were placed in a non-hermetically closed corundum crucibles and heated in air in a range from 20 to 500°C. The speed of temperature increase was 5°C/min with an accuracy of ± 0.5°C.

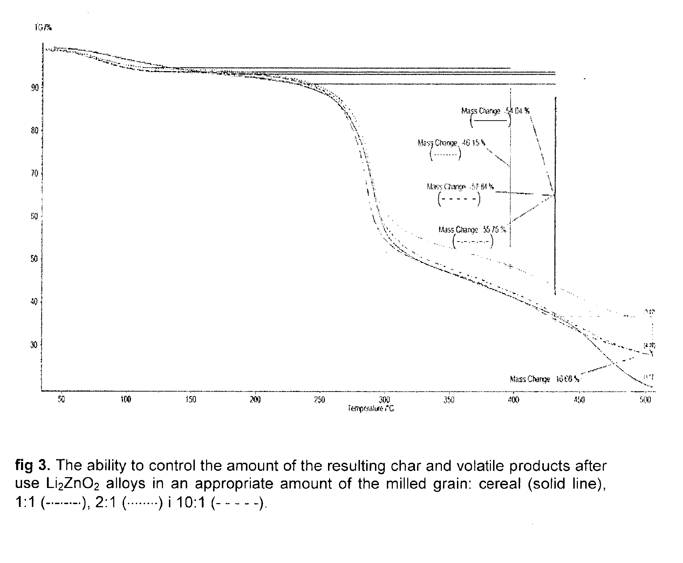

Catalytic properties of alloys Li₂ₓZn₁₋ₓO (fig. 2) and the ability to control the process in order to obtain the char or volatile products (fig. 3) were found.

Said salts were used in comparison to the cereal grain - rye - which is popular in Poland. By using the solution according to the invention, technology effects were obtained and the methodology for the preparation of alloy of catalyst, and the methodology for the preparation of rye systems with the addition of alloy catalyst, allowing for efficiency control of the resulting pyrolysate, char and volatile products, what causes economic effects associated with the relatively low production cost of biofuels.

### Literature

1. Ciesielski W., Studium nad nowymi sposobami wykorzystania skrobi do celów niespożywczych (kolektory jonów ci 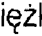 kich metali, stabilizatory gleby, biopaliwa), Wydawnictwo Akademii Jana D 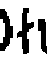 ugosza, Cz 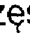 stochowa, (2010)
2. Ciesielski W., Study of polysaccharides thermal stability in the aspect of their future applications, w: Macrocyclic Chemistry: New Research Developments, Ed. Dániel W. Fitzpatrick and Henry J. Ulrich, Nova Science Publishers, (2010), ISBN: 978-1-60876-896-7
3. Ciesielski W., Bieganowski A., Ed. Tomasik P., Bertoft E., Soil stabilization by polysaccharides, Starch ISC (2010)
4. Ciesielski W., Ed. Tomasik P., Bertoft E., Polysaccharides, cereals and straws as components in production of biofuels, Starch ISC (2010)
5. Ciesielski W., Cereal grains as source for syngas, EJPAU, 12(2), #14 (2009)
6. Ciesielski W., Tomasik P., Complexes of amylose and amylopectins with transition metal salts and their thermal properties, J. Inorg. Biochem., 98, 2039 (2004)
7. Ciesielski W., Tomasik P., Coordination of cassava starch to metal ions and thermolysis of resulting complexes, Bull. Chem. Soc. Ethiopia, 17, 155 (2003)
8. Ciesielski W., Tomasik P., Metal complexes of xanthan gum, EJPAU, 11, 25 (2008)
9. Ciesielski W., Tomasik P., Werner - type metal complexes of potato starch, Int. J. Food Sci. Technol., 39, 691 (2004)
10.Roeper H., Koch H., The role of starch in biodegradable thermoplastic materials, Starch/Staerke, 42, 123 (1990).
11.Ruck H., Starch: From starch containing sources to isolation of starches and their applications, Nova Science Publ., New York (2003).

## Claims

1. Alloys of the systems Li/ZnO with a new structure, according to the invention, **characterized in that** it is represented by the general formula Li₂ₓZn₁₋ₓO, and has a characteristic structure as shown in fig. 1.

2. A process for preparing an alloy represented by the general formula Li₂ₓZn₁₋ₓO with specified structure shown in fig. 1, **characterized in that** it is obtained in the synthesis of ZnO - zinc oxide and lithium hydroxide monohydrate (LiOH x H₂O), where ZnO and LiOH x H₂O are mixed together in a relative to the stoichiometric proportion corresponding to LiZnO and Li₂ZnO₂ and the mixture is homogenized by mechanical agitation, and then compressed into tablets at 20 MPa, which are placed in a porcelain crucible, in an oven, and applying the following thermal cycle:
1) heating (10°C/min) up to T = 400°C,
2) isotherm plateau (24 hours)
3) heating (10°C/min) up to T = 600°C,
4) isotherm plateau (24 hours),
5) heating (10°C/min) up to T = 700°C,
6) isotherm plateau (1 hour),
7) cooling (about 5°C/min) at room temperature to obtain an alloy with a strictly described composition and structure shown in fig. 1.

3. The use of the produced alloy, according to claim. 1, represented by the general formula Li₂ₓZn₁₋ₓO and having the characteristic structure shown in fig. 1, as a means of catalytic properties, especially for the fermentation of cereals.

4. The use of popular, according to claim. 3, as a catalyst in the fermentation of grains, cereal and rye to produce biofuels.
